Europäisches Patentamt

European Patent Office

Office européen des brevets

(11) Veröffentlichungsnummer: 0 379 694
A2

## (12) EUROPÄISCHE PATENTANMELDUNG

(21) Anmeldenummer: 89123059.1

(22) Anmeldetag: 13.12.89

(51) Int. Cl.⁵: G01D 5/16

(30) Priorität: 24.12.88 DE 3843960

(43) Veröffentlichungstag der Anmeldung:
01.08.90 Patentblatt 90/31

(84) Benannte Vertragsstaaten:
AT BE CH DE ES FR GB GR IT LI LU NL SE

(71) Anmelder: BSG-Schalttechnik GmbH & Co. KG
Meisterstrasse 19
D-7460 Balingen 1(DE)

(72) Erfinder: Sämann, Rudolf
Burgstrasse 12
D-7460 Balingen-Ostdorf(DE)

(74) Vertreter: Otte, Peter, Dipl.-Ing.
Tiroler Strasse 15
D-7250 Leonberg(DE)

(54) Vorrichtung zur Weg- und/oder Druckumwandlung in eine elektrische Grösse.

(57) Bei einer Vorrichtung zur Weg- und/oder Druckumwandlung in eine elektrische Größe, die nach dem potentiometrischen Wirkungsprinzip arbeitet, wird vorgeschlagen, zur Realisierung eines schleiferlosen Potentiometers auf eine Widerstandsfläche ein balliges, elastisch verformbares und elektrisch leitendes Arbeitselement, vorzugsweise aus Leitsilikon aufzulegen und auf dieses durch äußere Stelleinwirkung einen mehr oder weniger starken Druck auszuüben, so daß das Leitsilikon-Arbeitselement einen mehr oder weniger größeren Bereich der Widerstandsbahn überdeckt und entweder kurzschließt oder hierdurch abgreift.

## Vorrichtung zur Weg- und/oder Druckumwandlung in eine elektrische Größe

Stand der Technik

Die Erfindung geht aus von einer Vorrichtung nach dem Oberbegriff des Anspruchs 1.

Vorrichtungen dieser Art sind in vielfältiger Form bekannt und betreffen im Grunde alle Einrichtungen oder Systeme, die bei Einwirkung einer äußeren physikalischen Größe in der Lage sind, ausgangsseitig ein entsprechendes, proportional oder nichtproportional von dieser physikalischen Größe abhängiges elektrisches Signal zu erzeugen, welches dann ausgewertet werden kann. Es kann sich hierbei im allgemeinsten Fall,und hierauf bezieht sich im bevorzugten Ausführungsbeispiel auch der Gegenstand vorliegender Erfindung, was allerdings nicht einschränkend zu verstehen ist, um ein Potentiometer handeln, welches bei Verschiebung seines Schleifers durch einen äußeren Stellangriff, also einem Weg folgend, eine variable Ausgangsspannung erzeugt. In diese Gruppe gehören auch Stellwiderstände, veränderliche Widerstände, unter Druckeinwirkung veränderliche Widerstände, im weiteren Sinne aber auch Druckmeßgeräte, die kontinuierlich oder stufig je nach einwirkendem Druck an ihrem Ausgang unterschiedliche elektrische Signale erzeugen können.

Wendet man sich speziell dem Bereich der Potentiometer zu, so sind diese in üblicher Weise so aufgebaut, daß sie eine Widerstandsbahn erfassen, die entweder als Längsbahn bei einem Linearpotentiometer in Längsrichtung auf der Widerstandsbahn verlaufend von dem oder den Schleiferfingern eines Abgriffs kontaktiert wird und deren Widerstandsbahn durch Verbinden der beiden Bahnenden mit einer elektrischen Spannung eine Spannungsverteilung aufweist, die dann von dem Abgriff als variables Potential erfaßt und weiterverarbeitenden Einrichtungen, etwa einer Phasenanschnittsteuerung, zugeführt wird.

Der Aufbau solcher Potentiometer folgt notwendigerweise vorgegebenen Grundprinzipien und kann von diesen auch nicht abweichen, wobei sehr häufig parallel zur Widerstandsbahn, gleichgültig ob diese kreisförmig bei einem Drehpotentiometer oder linear verläuft, eine Kollektorbahn noch angeordnet sein kann, die ebenfalls eine entsprechende geeignete Beschichtung, etwa aus Leitplastik aufweisen kann,und auf die das vom Schleifer abgegriffene Potential der Widerstandsbahn parallel übertragen wird. Der Schleifer kontaktiert dabei Widerstandsbahn und Kollektorbahn gleichzeitig, beispielsweise nach Art einer Brücke.

Ein besonderes Problem bei solchen Potentiometern ist der unausweichliche Verschleiß, der auftritt, wenn der Schleifer mit seinen Schleiferfingern über die Widerstandsbahn und/oder die Kollektorbahn gleitet, wobei, geschwindigkeitsabhängig auch Vibrationen im Schleiferbereich auftreten können, die,hervorgerufen durch Resonanzerscheinungen,zu einer noch schnelleren Zerstörung des Schleifers und/oder der Widerstandsbahn und der Kollektorbahn führen können.

Ferner ist es erforderlich, zur Durchführung der geordneten Schleiferbewegung über die Widerstandsbahn entsprechende Bewegungsapparaturen vorzusehen, also entweder den Schleifer führende Wellen, die in geeigneter Weise gelagert und dem Bereich von Widerstandsbahn und Kollektorbahn zugeordnet sein müssen oder, bei Linearpotentiometern Gleitschienen o. dgl., längs welcher der Schleifer geführt werden kann.

Der Aufbau eines solchen gleichzeitig eine elektromechanische Feinstruktur und elektrische Systeme beinhaltenden Potentiometers ist daher stets aufwendig und kostenträchtig, wobei bei bestimmten Anwendungsgebieten noch weitere Probleme hinzukommen.

Beispielsweise werden Potentiometer mit Schleifer bevorzugt bei Elektrowerkzeugen und hier wieder bei Elektrohandwerkzeugen wie Bohrmaschinen, Akkuschraubern, Sägen u. dgl. eingesetzt, und zwar vorzugsweise in Verbindung mit Mitteln zum Ein- und Ausschalten des Geräts, wobei dann durch ein ständiges Weiterdrücken im Sinne eines "Gasgebens" die Drehzahl des Elektrowerkzeugs kontinuierlich oder stufig geändert werden kann. In ähnlicher Weise können Potentiometer durch außenliegende Drehknopfbetätigung zur Drehmomenteinstellung verwendet werden. solche "Gas-Gebe-Schalter" mit Potentiometereigenschaften, die normalerweise auf eine Phasenanschnittsteuerung arbeiten und bei denen daher der veränderliche Stellwiderstand im Phasenanschnitt-Steuerkreis liegt, verfügen nicht selten über nur einen sehr minimalen Bauraum in den jeweiligen Maschinen, so daß Potentiometer von geradezu filigranem Aufbau verwendet werden müssen, um den gestellten Anforderungen genügen zu können. Solche Spezialpotentiometer mit hochwertigen, von der äußeren Verstellbewegung verschobenen Schleifern erfordern zu ihrer Herstellung hohe Werkzeugkosten und können in der späteren Fertigung nur mit großer Sorgfalt aufgrund ihrer filigranen Struktur im Elektrowerkzeug eingesetzt und verarbeitet werden.

Bei Verwendung in Verbindung mit konventionellen Phasenanschnittsteuerungen ergibt sich hier ein weiteres Problem, welches darin besteht, daß in der Position des häufig zu erbringenden "maximalen Stromflußwinkels" der Phasenanschnittsteuerung das Potentiometer nahezu kurzgeschlossen ist und bei einem sehr hohen Gesamtwiderstand nur ein sehr geringer Restwiderstand verbleibt (nennt man hier numerische Werte, die nicht einschränkend zu verstehen sind, dann kann der Gesamtwiderstand eines Potentiometers 220 kOhm betragen bei einem Restwiderstand von beispielsweise 10 kOhm). In dieser Stellung verteilt sich die im Potentiometer umgesetzte Verlustleistung auf ein sehr kleines Volumen, was zur lokalen Überhitzung und damit auch zu einem Durchbrennen des Potentiometers führen kann. Zwar ist es möglich, einem solchen Effekt durch einen zusätzlichen Schleiferkontakt, der dann den in dieser Hinsicht noch unkritischen Restwiderstand überbrückt, zu begegnen, dies erfordert aber zusätzlichen Aufwand und macht die ganze Vorrichtung noch komplizierter.

Der Erfindung liegt daher die Aufgabe zugrunde, ein Stellglied zu schaffen, dem eingangsseitig eine physikalische Größe, speziell eine Verschiebebewegung oder eine Druckeinwirkung zugeführt ist und welches,durchaus unter Beibehaltung des potentiometrischen Wirkungsprinzips, aber schleiferlos ausgangsseitig eine sich entsprechend verändernde elektrische Größe erzeugt, die eine Spannung oder ein Strom - primär ein sich verändernder Widerstand ist.

Vorteile der Erfindung

Die Erfindung löst diese Aufgabe mit den kennzeichnenden Merkmalen des Hauptanspruchs und hat den Vorteil, daß eine völlige Verschleißfreiheit erzielt werden kann, da sich das der äußeren physikalischen Einwirkung unterworfene Teil nicht relativ zu einer Widerstandsbahn bzw. längs dieser wegbewegt, sondern lediglich mehr oder weniger größere Teile der Widerstandsbahn ohne Relativverschiebung zwischen beiden zunehmend überdeckt bzw. in Gegenrichtung zunehmend freigibt. Daher ergeben sich eine Vielzahl von besonders wünschenswerten Freiheitsgraden in der Auslegung der einzelnen Komponenten; so ist der Konstrukteur beispielsweise nicht mehr gehalten, die Widerstandsbahn besonders verschleißfest zu gestalten, sondern kann diese nach optimalen Ergebnissen auf den gewünschten Zweck ausgerichtet so auslegen, daß sich die beabsichtigten Widerstandsveränderungen bei mehr oder weniger starkem Andrücken des sozusagen die Aufgaben des Schleifers übernehmenden elastischen Teils in optimaler Weise ergeben.

Es gibt eine Vielzahl von Materialien, die einer Formänderung unterworfen werden können und die auch bei unzähligen sich wiederholenden entsprechenden Formänderungen stets wieder ihre ursprüngliche Ausgangsstruktur einnehmen. Solche Materialien sind durchgehend geeignet, als Arbeitselement, wie dieser der physikalischen Einwirkung ausgesetzte Teil im folgenden bezeichnet werden soll, eingesetzt zu werden. Dieses Arbeitselement ist in seiner Grundstruktur ballig ausgebildet, liegt im Ruhezustand punktförmig oder nur eine kleinere Fläche einnehmend auf einer beliebig geformten Widerstandsbahn auf und überdeckt mit einer zunehmend größer werdenden äußeren Druckeinwirkung auf es einen immer größeren Teil der Widerstandsbahn.

Hieraus können in vorteilhafter Weise verschiedene Grundfunktionen abgeleitet werden; so ist es möglich, daß zunächst durch die unterschiedliche Flächenauflage des Arbeitselements auf der Widerstandsbahn geringere oder größere Bereiche derselben praktisch kurzgeschlossen werden, da das Arbeitselement in seiner Grundfunktion zusätzlich zur Elastizität elektrisch leitend ausgelegt oder beschichtet ist. Es ergibt sich dann in Abhängigkeit zur Verformung des Arbeitselements, also zu dem auf dieses einwirkenden Druck ein variabler Widerstand, wobei das Arbeitselement selbst nicht elektrisch kontaktiert zu sein braucht, sondern lediglich als Kurzschlußelement wirkt.

Andererseits ist es aber auch möglich, die Widerstandsbahn in üblicher Weise mit einer elektrischen Spannung zu versorgen, also über dieser oder längs dieser ein Potential aufzubauen und durch die elastische Verformung und die immer umfassendere Auflage und Überdekkung der Widerstandsbahn durch das Arbeitselement an diesem jeweils unterschiedliche Potentiale entstehen zu lassen, die dann abgegriffen werden können. Hierbei ist es auch möglich, das Arbeitselement durch den Druck lediglich einseitig verformbar zu gestalten oder von Anfang an so auszulegen, so daß sich von einem gegebenen Punkt der Widerstandsbahn ausgehend eine zunehmende Überdekkung nur in einer Richtung durch Formveränderung des Arbeitselements ergibt.

Da es von der Auslegung und der Materialwahl des Arbeitselements abhängt, mit welchem Druck die Verformungsarbeit am Arbeitselement geleistet werden kann, ist es möglich,

1. ein quasi wegloses Potentiometer zu realisieren oder

2. auf das Arbeitselement über Federdruck (unter Umsetzung eines Verschiebeweges) oder über eine Schräge einzuwirken, so daß sich nach außen hin eine normale Grundfunktion eines Potentiometers darstellt, wobei die Einwirkung drehend oder schiebend und gleichzeitig auch staubdicht realisiert werden kann.

3. Es ist ferner möglich, mit Hilfe geeigneter Druckumsetzungsgrößen (Membran, entsprechende Druckbehälter o. dgl.) einen einfachen, unempfindlichen Drucksensor aufzubauen, wobei es ferner möglich ist,

4. den Widerstandsverlauf über dem Weg bzw. über dem Druck vollkommen frei zu wählen, also linear, logarithmisch vorzugeben.

5. Da das Arbeitselement, welches bevorzugt beispielsweise als balliges Leitsilikonteil ausgebildet sein kann, über eine relativ große Masse verfügt, entfällt das weiter vorn erwähnte Problem eines Durchbrennens vollständig, da sich nur noch relativ kleine Verlustleistungen pro Volumen ergeben.

6. Der besonders einfache Aufbau des erfindungsgemäßen "Potentiometers" ist nicht nur in sich kostengünstig, sondern ermöglicht auch vergleichsweise geringe Werkzeugkosten für seine Herstellung bei problemloser Montage; die überhaupt nur zwei erforderlichen Teile für die Realisierung eines solchen Potentiometers machen ferner auf besonders einfache Art und Weise eine weitestgehende Miniaturisierung möglich;

7. da der erfindungsgemäße Potentiometerbaustein infolge Wegfalls jeglicher Relativbewegungen praktisch verschleißfrei ist, ergeben sich weder am Schleifer noch an der Widerstandsbahn Abriebprobleme; und schließlich

8. ist es möglich, für die Widerstandsbahn eine kostengünstige Widerstandspaste zu verwenden.

Durch die in den Unteransprüchen bzw. in der nachfolgenden Beschreibung aufgeführten Maßnahmen sind ferner vorteilhafte Weiterbildungen und Verbesserungen der im Hauptanspruch angegebenen Vorrichtung möglich. Besonders vorteilhaft ist die Ausbildung des Arbeitselements als ballig ausgebildeten Leitsilikonklotz.

Zeichnung

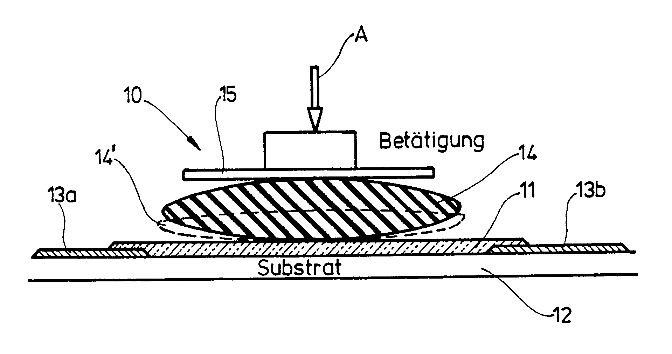

Ein Ausführungsbeispiel der Erfindung ist in der Zeichnung dargestellt und wird in der nachfolgenden Beschreibung näher erläutert. Die Zeichnung zeigt stark schematisiert die einfache Grundform eines entsprechend der Erfindung realisierten Ausführungsbeispiels.

Beschreibung der Ausführungsbeispiele

Der Grundgedanke vorliegender Erfindung besteht darin, unter Wegfall eines üblichen Schleifers auf eine Widerstandsfläche ein balliges, elektrisch leitendes und elastisch verformbares Arbeitselement aufzulegen und unter Wegfall jeglicher Relativbewegungen zwischen diesen beiden Teilen auf das Arbeitselement einen es verformenden Druck auszuüben, so daß je nach Druck das Arbeitselement variable Flächenbereiche der Widerstandsbahn überdeckt bzw. freigibt. Hierdurch ergeben sich elektrische Wirkungen, die, gegebenenfalls umgesetzt, in Form von auswertbaren Ausgangssignalen zur Verfügung stehen.

In der Zeichnung ist die erfindungsgemäße Vorrichtung zur Weg- und/oder Druckumwandlung in eine elektrische Größe mit 10 bezeichnet; sie umfaßt eine Widerstandsbahn 11 geeigneter Abmessungen, die als Poti-Bahn in Form einer Kohleschicht bzw. einer geeigneten Widerstandspaste (CERMET) ausgebildet sein kann und auf einem sie tragenden Substrat 12 aufgebaut ist. Es ist mindestens eine Zuleitung 13a vorgesehen. Bei dem dargestellten Ausführungsbeispiel sind zwei Zuleitungen 13a, 13b vorgesehen. Auf der Widerstandsbahn liegt das Arbeitselement 14 auf.

Das Arbeitselement 14 ist ein ballig ausgebildetes Teil, es kann also von einer Kugelform ausgehend beliebige Übergangsformen aufweisen, wobei, wie es sich selbstverständlich versteht, diese Balligkeit ausschließlich mit Bezug auf die Widerstandsbahn 11 Bedeutung hat. D.h. die ballige Form ist lediglich mit Bezug auf die von der Widerstandsbahn gebildeten Gegenflächen relevant. Ferner besteht das Arbeitselement aus einem geeigneten elastisch in seinen ursprünglichen Zustand (Ruhezustand) zurückkehrenden Material, kann also beispielsweise aus Gummi, Kautschuk oder aus sonstigen elastomeren Materialien oder, wie bei vorliegendem Ausführungsbeispiel bevorzugt, aus einem Leit-Silikon aufgebaut sein. Schließlich ist das Arbeitselement elektrisch leitend, wobei es entweder vollständig elektrisch leitend sein kann, also nur einen sehr geringen spezifischen elektrischen Widerstand aufweist, oder es kann sich auch um ein Widerstandsmaterial handeln. Dies hängt von dem jeweiligen Anwendungsfall ab. Bei dem dargestellten Ausführungsbeispiel ist das Arbeitselement selbst nicht mit einem elektrischen Abgriff oder einem Anschluß verbunden, so daß es sich hier im einfachsten Fall um einen von dem auf das Arbeitselement 14 einwirkenden Druck in seinem Widerstandswert veränderlichen Stellwiderstand handelt, der beidseitig über elektrische Kontaktanschlüsse 13a, 13b oder entsprechende Zuleitungen verfügt.

Ist das ballig ausgebildete Arbeitselement aus einem geeigneten elastischen Leitsilikon aufgebaut, wie es einem bevorzugten Ausführungsbeispiel entspricht, dann liegt es im Ruhezustand bei keinem oder nur geringem einwirkenden Druck, der durch den Pfeil A angedeutet ist, auf der an sich beliebig geformten Widerstandsbahn im wesentlichen punktförmig auf. Mit zunehmendem Druck verformt sich das Arbeitselement, wobei gestrichelt bei 14' eine zweite Position des Arbeitselements erkennbar ist, und liegt dann auf einem immer größer werdenden Bereich der Poti-Bahn auf. Handelt es sich wie hier um ein niederohmiges Material des Leitsilikonklotzes, dann wird hierdurch zunehmend ein immer größerer Bereich der Poti-Bahn 11 kurzgeschlossen, wodurch sich eine entsprechende Widerstandsänderung ergibt, die abhängig von dem auf das Arbeitselement einwirkenden Druck ist. Diese Widerstandsänderung läßt sich in geeigneter Weise auswerten, worauf nicht weiter eingegangen zu werden braucht, da dies zu den grundlegenden Kenntnissen des Fachmanns gehört.

Auf eine alternative Möglichkeit ist weiter vorn schon kurz eingegangen worden; diese besteht darin, daß das Arbeitselement selbst niederohmig mit einem Abgriff verbunden ist und insoweit selbst als Abgriff wirkt, wobei es problemlos möglich ist, die Ausdehnung oder der Flächenbereich, den das Arbeitselement aufnimmt, in geeigneter Weise asymmetrisch zu begrenzen oder vorzugeben und es daher möglich ist, unterschiedliche Bereiche der Widerstands- oder Poti-Bahn zu erfassen und abzugreifen.

Eine dritte Anwendungsmöglichkeit, die ebenfalls innerhalb des erfindungsgemäßen Rahmens liegt, besteht darin, den sich mit zunehmender Flächenüberdeckung verringernden Übergangswiderstand zwischen der Poti-Bahnoberfläche und dem Arbeitselement auszunutzen, wobei das Material des Arbeitselements niederohmig sein oder beliebige Zwischenwerte annehmen kann. Auch in diesem Fall benötigt das Arbeitselement einen elektrischen Abgriff oder eine sonstige elektrisch weiterführende Verbindung zur Ableitung der abgegriffenen Spannung oder Ströme.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Vorrichtung zur Weg- und/oder Druckumwandlung in eine elektrische Größe (Spannung, Strom, Widerstand) nach dem potentiometrischen Wirkungsprinzip, als veränderlicher Stellwiderstand, Potentiometer, Signalgeber, Druckgeber u. dgl., gekennzeichnet als schleiferloses Potentiometer mit einem auf einer Widerstandsfläche (11) aufliegenden, elastisch verformbaren und elektrisch leitenden Teil (Arbeitselement 14), welches der äußeren Stelleinwirkung ausgesetzt ist.

2. Vorrichtung nach Anspruch 1, dadurch gekennzeichnet, daß mindestens der der Widerstandsbahn oder Poti-Bahn (Kohleschicht; Widerstandspaste; Cermet) zugewandte Bereich des Arbeitselements (14) ballig ausgebildet ist und im Ruhezustand punktförmig auf der Widerstandsbahn aufliegt und sich mit zunehmender Druckeinwirkung auf einen immer größeren Bereich der Widerstandsbahn auflegt.

3. Vorrichtung nach Anspruch 1 oder 2, dadurch gekennzeichnet, daß das Arbeitselement ein niederohmiger Leitsilikonklotz ist.

4. Vorrichtung nach einem der Ansprüche 1-3, dadurch gekennzeichnet, daß auf dem Arbeitselement eine flächige Auflage (15) ruht, über welche die Druckeinwirkung (A) bzw. Wegverschiebung zur strukturellen Verformung erfolgt.

5. Vorrichtung nach einem der Ansprüche 1-4, dadurch gekennzeichnet, daß die Widerstandsbahn mindestens einen elektrischen Anschlußkontakt (13a, 13b) aufweist.

6. Vorrichtung nach einem der Ansprüche 1-5, dadurch gekennzeichnet, daß die Widerstandsbahn zwei elektrische Anschlußkontakte (13a, 13b) aufweist und durch die druckabhängig veränderliche Auflage des Arbeitselements die Widerstandsbahn bei relativer Bewegungsfreiheit mehr oder weniger kurzgeschlossen wird, mit nachgeschalteten Mitteln zur Auswertung der sich hierdurch ergebenden Widerstandsänderung.

7. Vorrichtung nach einem der Ansprüche 1-5, dadurch gekennzeichnet, daß auch das elektrische Arbeitselement einen elektrischen Anschlußkontakt aufweist.

8. Vorrichtung nach einem der Ansprüche 1-7, dadurch gekennzeichnet, daß das Leitsilikonmaterial des Arbeitselements (14) niederohmig ist.